# EUROPÄISCHE PATENTSCHRIFT

(11) **EP 2 542 813 B1**
(45) Veröffentlichungstag und Bekanntmachung des Hinweises auf die Patenterteilung: **08.01.2014**
(21) Anmeldenummer: 11707545.7
(22) Anmeldetag: 28.01.2011
(51) Int. Cl.: F16L 33/213, F16L 13/14

(54) **VERFAHREN BEI DEM EIN LEITUNGSVERBINDER VON EINER BEFESTIGUNGSVORRICHTUNG AN EINER LEITUNG FÜR FLÜSSIGE UND/ODER GASFÖRMIGE MEDIEN BEFESTIGT WIRD**
METHOD IN WHICH A LINE CONNECTOR OF A FASTENING DEVICE IS FASTENED TO A LINE FOR LIQUID AND/OR GASEOUS MEDIA
PROCÉDÉ DESTINÉ À LA FIXATION D'UN RACCORD DE CONDUITE AU MOYEN D'UN DISPOSITIF DE FIXATION SUR UNE CONDUITE POUR MILIEUX LIQUIDES ET/OU GAZEUX

(30) Priorität: 04.03.2010 AT 3432010
(43) Veröffentlichungstag der Anmeldung: 09.01.2013
(73) Patentinhaber: Henn GmbH & Co.KG, 6850 Dornbirn (AT)
(72) Erfinder: HARTMANN, Harald, A-6850 Dornbirn (AT); BACHMANN, Werner, A-6971 Hard (AT)
(74) Vertreter: Burger, Hannes
(86) Internationale Anmeldenummer: PCT/AT2011/000047
(87) Internationale Veröffentlichungsnummer: WO 2011/106805

(56) Entgegenhaltungen:
- EP-A1- 2 019 243
- DE-B3-102005 028 558
- DE-C1- 19 956 000
- US-A- 5 025 546
- US-A- 5 964 023

## Beschreibung

Die vorliegende Erfindung betrifft ein Verfahren bei dem ein Leitungsverbinder, insbesondere Steckverbinder, von einer Befestigungsvorrichtung an einer Leitung für flüssige und/oder gasförmige Medien befestigt wird. Darüber hinaus betrifft die Erfindung aber auch eine Leitungsverbindungsvorrichtung an sich.

Beim Stand der Technik sind Verfahren bekannt, bei denen Leitungsverbinder von einer Befestigungsvorrichtung an einer Leitung für flüssige und/oder gasförmige Medien befestigt werden. Solche Leitungsverbinder werden auch häufig als Muffen bezeichnet und dienen dem Verbinden von Leitungen. Gattungsgemäße Leitungsverbinder können mit dem entsprechenden Gegenverbinder, welcher z. B. an einer anderen Leitung angebracht sein kann, eine Schraubverbindung, einen Bajonettverschluss oder dergleichen ausbilden. Häufig handelt es sich bei solchen Leitungsverbindern allerdings um Steckverbinder, welche durch Zusammenstecken miteinander verbunden werden. Einen solchen Leitungsverbinder zeigt zum Beispiel die Druckschrift EP 2 019 243.

Bei gattungsgemäßen Verfahren müssen die Leitungsverbinder und die Leitung zunächst zusammengefügt und anschließend zur Durchführung der endgültigen Befestigung in die Befestigungsvorrichtung eingelegt werden. Dieser Vorgang wird häufig händisch von Be-dienpersonal der Befestigungsvorrichtung durchgeführt. Die Praxis zeigt, dass es dabei zu Fehlern seitens des Bedienpersonals kommt. So tritt z. B. manchmal der Fall auf, dass der Leitungsverbinder in die Befestigungsvorrichtung eingesetzt wird, ohne dass er vorher mit einer Leitung zusammengefügt wurde. Weiters kann es passieren, dass das jeweilige Be-dienpersonal Leitungsverbinder und Leitung zwar locker zusammenfügt, aber nicht in die Befestigungsvorrichtung einsetzt, so dass der eigentliche Befestigungsvorgang nicht stattfindet. Infolgedessen ist dann die Leitung am Leitungsverbinder nur locker gehalten, ohne dass dies auf den ersten Blick erkennbar sein muss. Werden der Leitungsverbinder und die Leitung dann ihrer endgültigen Verwendung zugeführt, so führt dies beim ersten Druckaufbau in der Leitung dazu, dass sich die Leitung vom Leitungsverbinder ablöst, was zu einem erheblichen Schaden führen kann.

Aufgabe der Erfindung ist es, gattungsgemäße Verfahren dahingehend zu verbessern, dass solche Fehler rechtzeitig vor der Inbetriebnahme einer ihrer endgültigen Verwendung zugeführten Leitung samt Leitungsverbinder bemerkt werden.

Dies wird erfindungsgemäß erreicht, indem während oder nach dem Befestigen des Leitungsverbinders an der Leitung ein am Leitungsverbinder und/oder an der Leitung vorab vorhandener Sperrkörper mittels der Befestigungsvorrichtung vom Leitungsverbinder und/oder von der Leitung entfernt wird, wobei durch den Sperrkörper, solange dieser am Leitungsverbinder und/oder an der Leitung vorhanden ist, ein Verbinden eines Gegenverbinders mit dem Leitungsverbinder verhindert wird.

Es ist somit eine Grundidee der Erfindung, am Leitungsverbinder und/oder an der Leitung einen Sperrkörper vorzusehen, welcher erst während oder nach dem Befestigungsvorgang der Leitung am Leitungsverbinder von der Befestigungsvorrichtung entfernt wird. Solange der Sperrkörper noch am Leitungsverbinder und/oder an der Leitung vorhanden ist, verhindert er ein Verbinden des Leitungsverbinders mit einem entsprechenden Gegenverbinder. Hierdurch wird sichergestellt, dass der Leitungsverbinder nur dann in seiner endgültigen Verwendung mit einem Gegenverbinder verbunden werden kann, wenn die Befestigungsvorrichtung den Leitungsverbinder und die Leitung den Vorgaben entsprechend fest miteinander verbunden hat. Nur wenn dies gewährleistet ist, wurde der Sperrkörper entfernt. Ist der Sperrkörper hingegen noch vorhanden, z. B. weil das Bedienpersonal die Leitung mit dem Leitungsverbinder zwar verbunden aber nicht in die Befestigungsvorrichtung eingelegt hat, so verhindert der Sperrkörper, dass der Gegenverbinder mit dem Leitungsverbinder verbunden werden kann, so dass der Fehler rechtzeitig erkannt wird.

Um Missbrauch vorzubeugen, ist bevorzugt vorgesehen, dass der Sperrkörper so am Leitungsverbinder und/oder an der Leitung befestigt bzw. angeordnet ist, dass er nicht von Hand sondern nur mittels der Befestigungsvorrichtung entfernt werden kann.

Die Erfindung kann bei verschiedensten Arten von Leitungsverbindern eingesetzt werden. Diese können Teile einer Schraubverbindung, eines Bajonettverschlusses oder dergleichen sein. Besonders bevorzugt handelt es sich bei den erfindungsgemäßen Leitungsverbindern aber um Steckverbinder, bei denen Leitungsverbinder und Gegenverbinder eine Steckverbindung ausbilden, also durch Ineinanderstecken miteinander verbunden werden.

Der Sperrkörper kann bei erfindungsgemäßen Ausgestaltungsformen auf sehr unterschiedliche Arten und Weisen mittels der Befestigungsvorrichtung vom Leitungsverbinder und/oder von der Leitung entfernt werden. So ist in einer ersten Gruppe von Ausgestaltungsformen vorgesehen, dass der Sperrkörper zum Entfernen vom Leitungsverbinder und/oder von der Leitung mittels der Befestigungsreinrichtung im weiteren Sinne vom Leitungsverbinder und/oder von der Leitung abgenommen wird. Ist der Sperrkörper als separater Bauteil ausgeführt, so kann er mittels der Befestigungsvorrichtung vom Leitungsverbinder und/oder von der Leitung z. B. abgezogen und/oder abgeschraubt werden. Es ist aber auch denkbar, dass der Sperrkörper zunächst einstückig am Leitungsverb-inder und/oder an der Leitung befestigt ist. In diesem Fall sehen erfindungsgemäße Varianten z. B. vor, dass der Sperrkörper vom Leitungsverbinder und/oder von der Leitung abgeschnitten und/oder abgebrochen wird. Ein Entfernen des Sperrkörpers im Sinne der Erfindung kann aber auch noch auf andere Art und Weise erfolgen. Z. B. ist es denkbar, dass die Befestigungsvorrichtung den Sperrkörper vom Leitungsverbinder und/oder von der Leitung mittels, vorzugsweise plastischer, Umformung des Leitungsverbinders und/oder der Leitung entfernt. Bei diesen Varianten ist der Sperrkörper somit in der Regel einstückig als Teil des Leitungsverbinders und/oder der Leitung ausgeführt. Das Entfernen im Sinne der Erfindung erfolgt bei diesen Varianten, indem der Leitungsverbinder und/oder die Leitung so umgeformt werden, dass anschließend der Gegenverbinder mit dem Leitungsverbinder verbunden werden kann. Dabei muss nicht zwingend ein Teil abgenommen werden.

Welche Relativbewegungen bei dem Vorgang des Entfernens des Sperrkörpers zwischen Befestigungsvorrichtung einerseits sowie Leitungsverbinder und Leitung andererseits durchgeführt werden, kann an die jeweiligen Anforderungen angepasst sein. So ist es denkbar, dass beim Entfernen des Sperrkörpers der Leitungsverbinder und die Leitung in einer Ruheposition verbleiben und die Befestigungsvorrichtung bzw. ein Teil davon sich bewegt. Andersherum ist es aber auch denkbar, dass die Befestigungsvorrichtung bei Vorgang des Entfernens in Ruhe verharrt und den Sperrkörper nur festhält, so dass das Entfernen des Sperrkörpers erfolgt, wenn Leitungsverbinder und Leitung von der Befestigungsvorrichtung abgenommen werden.

Besonders bevorzugte Ausgestaltungsformen des erfindungsgemäßen Verfahrens sehen vor, dass Leitungsverbinder und Leitung mittels, vorzugsweise plastischer, Umformung, z.B. durch ein miteinander Verpressen, aneinander befestigt werden. Dies kann z. B. erreicht werden, indem die Befestigungsvorrichtung zumindest ein Umformwerkzeug aufweist, wobei der Leitungsverbinder und/oder die Leitung zum Befestigen des Leitungsverbinders an der Leitung zumindest bereichsweise, vorzugsweise plastisch, von dem Umformwerkzeug umgeformt wird bzw. werden. Besonders bevorzugte Varianten sehen dabei vor, dass der Sperrkörper mittels des Umformwerkzeugs vom Leitungsverbinder und/oder von der Leitung entfernt wird. Auch hier gibt es verschiedene Möglichkeiten, wie die Relativbewegung zwischen Umformwerkzeug und Leitungsverbinder und/oder Leitung beim Entfernen des Sperrkörpers erfolgt.

Um die Qualität der Befestigung des Leitungsverbinders an der Leitung zu kontrollieren bevor der Sperrkörper entfernt wird, sehen bevorzugte Ausgestaltungsformen des erfindungsgemäßen Verfahrens vor, dass von der Befestigungsvorrichtung vor dem Entfernen des Sperrkörpers anhand zumindest eines Kontrollparameters überprüft wird, ob der Leitungsverbinder an der Leitung befestigt wurde. Hierbei können unterschiedlichste Kontrollparameter herangezogen werden. So ist es z. B. denkbar, dass der oder zumindest einer der Kontrollparameter einen für den Befestigungsvorgang charakteristischer Kontrollparameter ist. In diesem Zusammenhang kann z. B. vorgesehen sein, dass als für den Befestigungsvorgang charakteristischer Kontrollparameter beim Befestigungsvorgang, vorzugsweise Umformvorgang, in oder an der Befestigungsvorrichtung, vorzugsweise vom Umformwerkzeug, aufgewendete Kräfte und/oder Wegstrecken herangezogen wird bzw. werden. Der oder einer der Kontrollparameter kann aber auch darin bestehen zu überprüfen, ob die Leitung überhaupt vorhanden ist.

Der Begriff der Leitung ist allgemein aufzufassen. Diese kann z.B. von einem mehr oder weniger flexiblen Schlauch oder einem im Wesentlichen starren Rohr gebildet werden. Sie dient jedenfalls dem Transport von flüssigen und/oder gasförmigen Medien. Es kann sich auch um einen Leitungsabschnitt handeln.

Mittels erfindungsgemäßer Leitungsverbinder können z.B. Verbindungen von Abschnitten von Kühlwasserleitungen von Verbrennungsmotoren oder Ladeluftleitungen von Verbrennungsmotoren hergestellt werden. In solchen herrscht ein Druck von bis zu 6 bar.

Eine Leitungsverbindungsvorrichtung, welche insbesondere für ein erfin dungsgemäßes Verfahren eingesetzt werden kann, sieht vor, dass der Leitungsverbinder einen Sperrkörper aufweist, welcher, vorzugsweise ohne Deformation anderer Bestandteile des Leitungsverbinders, vom Leitungsverbinder entfernbar ist, wobei durch den Sperrkörper, solange dieser am Leitungsverbinder vorhanden ist, ein Verbinden eines Gegenverbinders mit dem Leitungsverbinder verhindert ist. Dass der Sperrkörper dabei ohne Deformation anderer Bestandteile des Leitungsverbinders entfernt werden kann, ist dabei so zu verstehen, dass beim Entfernen des Sperrkörpers vom Leitungsverbinder keine relevanten Deformationen anderer Bestandteile des Leitungsverbinders stattfinden, so dass der Leitungsverbinder auch nach Entfernen des Sperrkörpers noch voll funktionsfähig und nicht verbogen oder in sonst irgendeiner Art und Weise gebrauchsunfähig ist. Dies lässt sich durch Zusammenfügen von Gegenverbinder und Leitungsverbinder einfach überprüfen. Entsprechende Leitungsverbinder könnten auch als Muffen, in der Ausgestaltungsform einer Steckverbindung auch als Steckmuffen, bezeichnet werden. Es kann sich dabei um weibliche oder männliche Leitungsverbinder handeln. Wenn die Befestigung der Leitung am Leitungsverbinder mittels plastischer Umformung erfolgt, so sind die Leitungsverbinder bevorzugt zumindest bereichsweise plastisch deformierbar ausgeführt. Es kann sich in diesem Sinne bei den Leitungsverbindern um ein vollständig oder nur bereichsweise aus Blech gefertigtes Bauteil handeln. Bei solchen Leitungsverbindern ist bevorzugt vorgesehen, dass der Sperrkörper als separates Bauteil über eine Rastverbindung und/oder über eine reibschlüssige Verbindung und/oder über eine Schraubverbindung an anderen Bestandteilen des Leitungsverb-inders befestigt ist. Andere Ausgestaltungsformen von Leitungsverbinden sehen vor, dass der Sperrkörper einstückig mit dem Leitungsverbinder ausgebildet ist, wobei eine Soll-Bruchstelle zwischen dem Sperrkörper und den diesen umgebenden bzw. haltenden Bestandteilen des Leitungsverbinders ausgebildet ist.

Bevorzugte Ausgestaltungsformen des Leitungsverbinders und/oder der Befestigungsvorrichtung ergeben sich aus den Schilderungen des erfindungsgemäßen Verfahrens und seiner bevorzugten Ausgestaltungsformen.

Weitere Einzelheiten und Merkmale bevorzugter Ausgestaltungsformen der Erfindung ergeben sich aus der nachfolgenden Figurenbeschreibung. Dabei zeigen:
Fig. 1 und 2 ein Beispiel eines Leitungsverbinders auf einer Leitung, wobei der Sperrkörper noch nicht entfernt ist;
Fig. 3 denselben Leitungsverbinder, wobei der Sperrkörper vom Leitungsverbinder entfernt ist;
Fig. 4 bis 6 verschiedene Schnittdarstellungen durch den Leitungsverbinder, die Leitung und den Gegenverbinder und
Fig. 7 bis 14 eine Abfolge von Verfahrensschritten, wie Leitungsverbinder und Leitung auf erfindungsgemäße Art und Weise aneinander befestigt werden können.

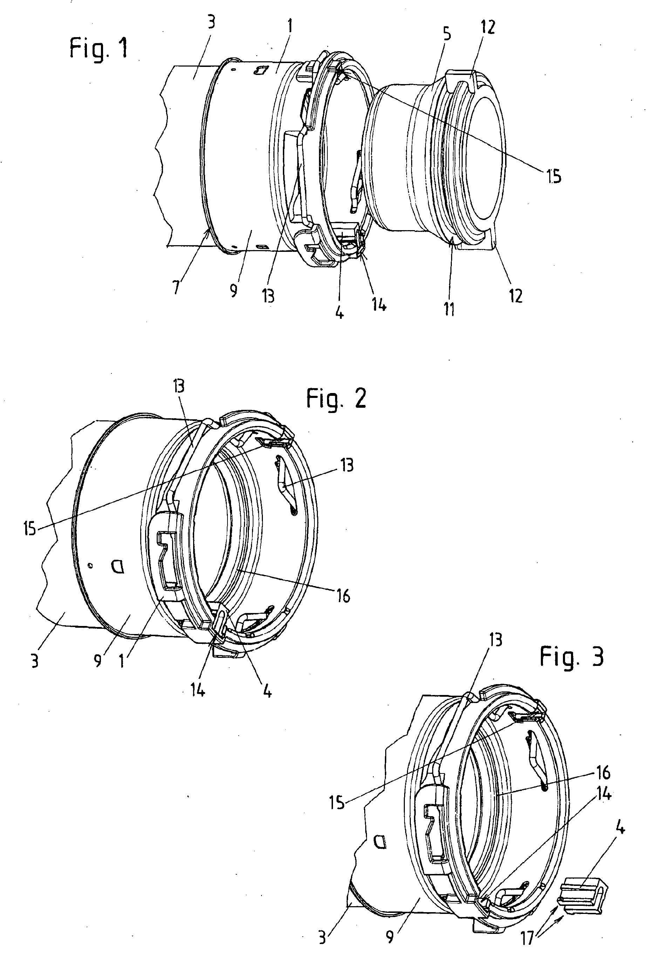

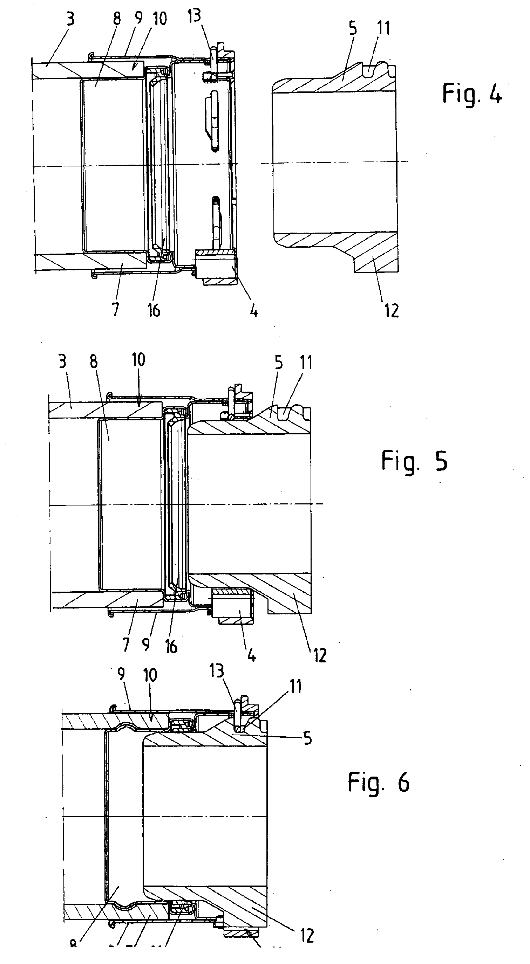

In den Fig. 1 und 2 sind in jeweils perspektivischen Darstellungen der Leitungsverbinder 1 und die Leitung 3 bzw. ein Abschnitt davon dargestellt. Der Leitungsverbinder 1 ist dabei auf den Endabschnitt 7 der Leitung 3 zwar aufgesteckt aber noch nicht endgültig an der Leitung 3 befestigt. Dieser Zustand tritt z. B. auf, wenn der Endabschnitt 7 zwar in den in den Fig. 4 bis 6 sichtbaren Aufnahmehohlraum 10 eingesteckt wurde, aber die endgültige Befestigung des Leitungsverbinders 1 an der Leitung 3 mittels Befestigungsvorrichtung 2 nicht durchgeführt wurde. Damit Leitungsverbinder 1 und Leitung 3 in diesem Zustand nicht versehentlich gemäß ihrer endgültigen Verwendung verbaut werden, ist im gezeigten Ausführungsbeispiel am Leitungsverbinder 1 der Sperrkörper 4 angeordnet. Dieser verhindert, dass der in Fig. 1 dargestellte Gegenverbinder 5 mit dem Leitungsverbinder 1 in der üblichen Art und Weise verbunden werden kann.

Im gezeigten Ausführungsbeispiel handelt es sich beim Leitungsverbinder 1 um eine Muffe als weiblicher Teil einer Steckverbindung. Diese Muffe 1 ist im gezeigten Beispiel größtenteils als umgeformtes Blechteil aus einem Metallblech ausgebildet. Im Inneren des Leitungsverbinders 1 befindet sich im gezeigten Ausführungsbeispiel eine Dichtung 16, welche im fertig montierten Zustand des Gegenverbinders 5 an diesem anliegt. Weiters weist der Leitungsverbinders 1 dieses Ausführungsbeispiels eine Rastfeder 13 auf, welche dazu vorgesehen ist, in die Nut 11 des Gegenverbinders 5 einzugreifen, wenn dieser vollständig in den Leitungsverbinder 1 eingeschoben ist. In diesem Zustand wird der Gegenverbinder 5 somit durch die Rastfeder 13 im Leitungsverbinder 1 gehalten. Dies ist allerdings erst dann möglich, wenn vorher der Sperrkörper 4 erfindungsgemäß entfernt wurde, was wiederum gemäß der Erfindung nur dann möglich ist, wenn Leitungsverbinder 1 und Leitung 3 endgültig aneinander befestigt sind.

Im gezeigten Ausführungsbeispiel sind am Gegenverbinder 5 zwei Indexkörper 12 angeordnet, welche dazu dienen, sicherzustellen, dass Gegenverbinder 5 und Leitungsverbin-der 1 nur in einer einzigen Position miteinander verbunden werden können. Am Leitungsverbinder 1 sind zur Aufnahme der Indexkörper 12 die Ausnehmungen 14 und 15 vorgesehen. Der Gegenverbinder 5 kann aber erst dann mit dem Leitungsverbinder 1 verbunden werden, wenn der im gezeigten Ausführungsbeispiel in der einen Ausnehmung 14 angeordnete Sperrkörper 4 entfernt worden ist. Die Indexkörper 12 und die Ausnehmungen 14 und 15 können in anderen Ausgestaltungsformen der Erfindung auch entfallen.

Fig. 3 zeigt den Leitungsverbinder 1 in dem Zustand, in dem der Sperrkörper 4 von ihm durch Herausziehen aus der Ausnehmung 14 entfernt wurde. In Fig. 3 sind die in diesem Ausführungsbeispiel am Absperrkörper 4 vorhandenen Rasten 17 zu sehen, welche Teil der Rastverbindung dieses Ausführungsbeispiels sind, mit der der Sperrkörper 4 im Leitungsverbinder 1 gehalten ist, bevor die Befestigungsvorrichtung 2 ihn aus dem Leitungsverbinder 1 entfernt. Die Fig. 4 und 5 zeigen einen Schnitt durch Leitungsverbinder 1, Leitung 3 und Gegenverbinder 5 in einem Zustand, bei dem Leitungsverbinder 1 und Leitung 3 zwar ineinander gesteckt, aber noch nicht vollständig aneinander befestigt sind. In diesem Zustand ist der Sperrkörper 4 noch vorhanden, so dass der Gegenverbinder 5, wie insbesondere in Fig. 5 zu sehen, nicht vollständig in den Leitungsverbinder 1 eingeschoben und damit auch nicht mit diesem vollständig verbunden werden kann. In den Schnittdarstellungen ist gut zu sehen, dass in diesem Ausführungsbeispiel die Wände 8 und 9 des Leitungsverbinders einen ringförmigen Aufnahmehohlraum 10 ausbilden, in den der Endabschnitt 7 der Leitung 3 eingeschoben ist. Der Vollständigkeit halber wird darauf hingewiesen, dass abweichend vom gezeigten Bespiel zumindest eine der Wände 8 oder 9 nicht zwingend einstückig mit dem Rest des Leitungsverbinders 1 verbunden sein müssen. Zumindest eine der Wände 8 oder 9 kann auch als Aufsteckring oder dergleichen ausgebildet sein. Der obere Indexkörper 12 und die ihm zugeordnete Ausnehmung 15 im Leitungsverbinder 1 sind in den Fig. 4 bis 6 nicht zu sehen, da sie im gezeigten Schnitt nicht vorhanden sind.

Im in Fig. 6 dargestellten Zustand ist die Leitung 3 vollständig am Leitungsverbinder 1 befestigt. Im gezeigten Ausführungsbeispiel erfolgte diese Befestigung durch Umformung des Leitungsverbinders 1 und der Leitung 3 im Bereich der Wände 8 und 9 des Leitungsverbinders 1 und des Endabschnittes 7 der Leitung 3. Nachdem diese Befestigung fertig gestellt ist, wurde der Sperrkörper 4 von der Befestigungsvorrichtung 2 entfernt, so dass der Gegenverbinder 5 vollständig mit dem Leitungsverbinder 1 verbunden werden kann. Wie in Fig. 6 zu sehen, ist in diesem Zustand der untere Indexkörper 12 vollständig in die Ausnehmung 14 eingeschoben, in der vorher der Sperrkörper 4 vorhanden war. Weiters greift die Rastfeder 13 in die Nut 11 des Gegenverbinders 5 ein, um diesen am Leitungsverbinder 1 festzuhalten. Die Dichtung 16 dichtet die Verbindung zwischen Leitungsverbinder 1 und Gegenverbinder 5 ab.

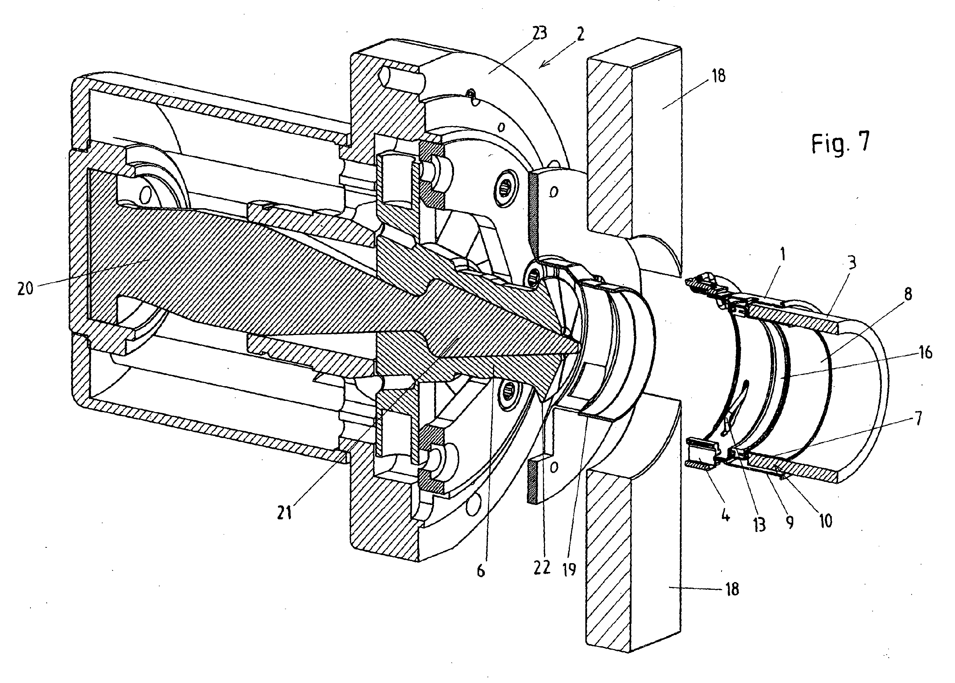

In den Fig. 7 bis 14 ist eine Abfolge von Verfahrensschritten gezeigt. Dargestellt ist ein Beispiel, wie mittels einer erfindungsgemäßen Befestigungsvorrichtung 2 eine Leitung 3 und ein Leitungsverbinder 1, sowie sie in den Fig. 1 bis 6 gezeigt sind, aneinander befestigt werden, wobei im Anschluss an eine solche Befestigung der Sperrkörper 4 mittels der Befestigungsvorrichtung 2 vom Leitungsverbinder 1 entfernt wird. Im gezeigten Ausführungsbeispiel werden der Leitungsverbinder 1 und die Leitung 3 zum aneinander Befestigen miteinander umgeformt. Der dabei erreichte Endzustand ist auch in Fig. 6 im Schnitt gezeigt. Die im gezeigten Ausführungsbeispiel verwendete Befestigungsvorrichtung 2 weist ein Gehäuse 23 auf, welches relativ zu den Gegenhaltebacken 18 und dem Verbinderträger 19 verschiebbar ist. Zur Durchführung dieser Verschiebung können z.B. an sich bekannte, hier nicht explizit dargestellte, elektrische, hydraulische oder pneumatische Antriebe verwendet werden, um nur einige mögliche Beispiele zu nennen. Innerhalb des Gehäuses 23 der gezeigten Befestigungsvorrichtung 2 befindet sich ein Pressstempel 20 mit einer Spitze 21, welcher der Betätigung des Umformwerkzeuges 6 dient. Der Pressstempel 20 und seine Spitze 21 können relativ zum Gehäuse 23 und damit auch zum Umformwerkzeug 6 in Längsrichtung des Pressstempels 20 verschoben werden. Hierzu können ebenfalls hydraulische, pneumatische oder elektrische oder sonstige Antriebe zum Einsatz kommen, welche in der gezeigten schematisierten Darstellung nicht explizit dargestellt sind. Durch Verschieben des Pressstempels 20 und seiner Spitze 21 relativ zum Gehäuse 23 und zum Umformwerkzeug 6 wird letzteres auseinandergespreizt und auch wieder zusammengezogen.

Fig. 7 zeigt zunächst die Ausgangssituation. Das Gehäuse 23 und der Pressstempel 20 befinden sich in einer zurückgezogenen Position. Die Gegenhaltebacken 18 sind voneinander weg bewegt und damit in ihrer geöffneten Stellung. Die Leitung 3 ist in den Aufnahmehohlraum 10 des Leitungsverbinders 1 bereits eingesteckt, die eigentliche Verbindung zwischen Leitung 3 und Leitungsverbinder 1 hat aber noch nicht stattgefunden. Entsprechend befindet sich der Sperrkörper 4 auch noch am Leitungsverbinder 1, welcher noch nicht auf den Verbinderträger 19 aufgesteckt ist.

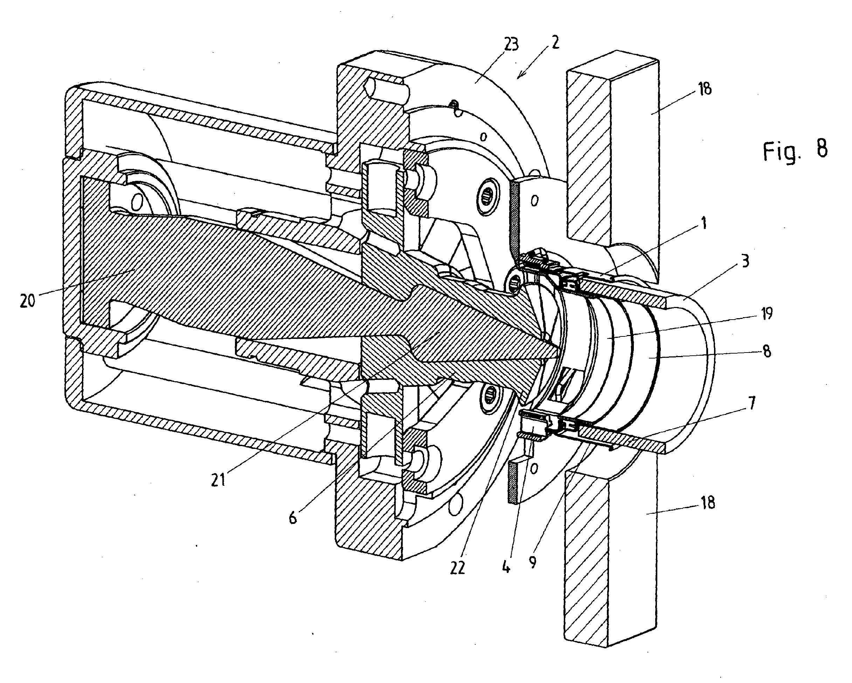

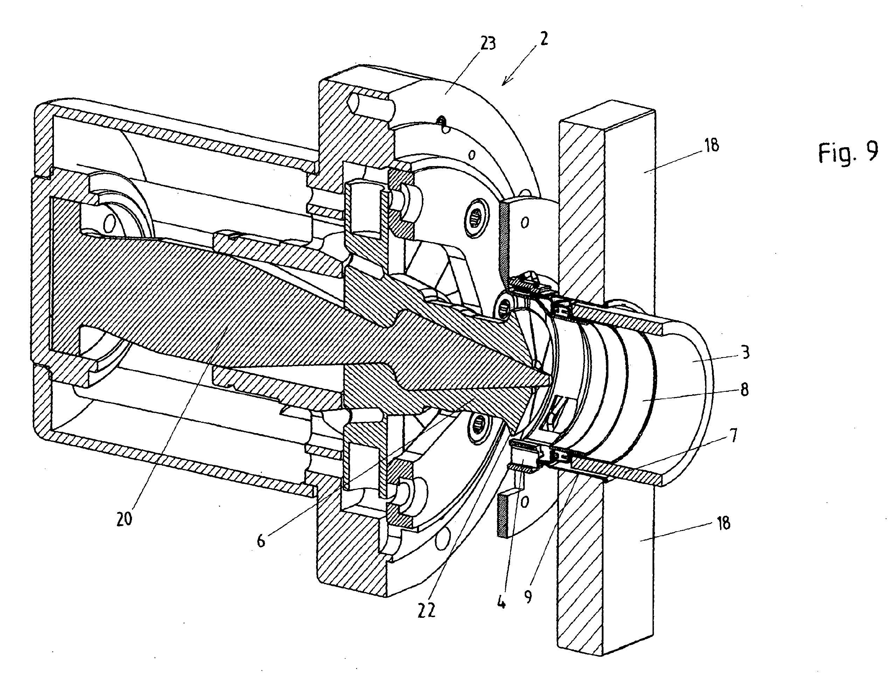

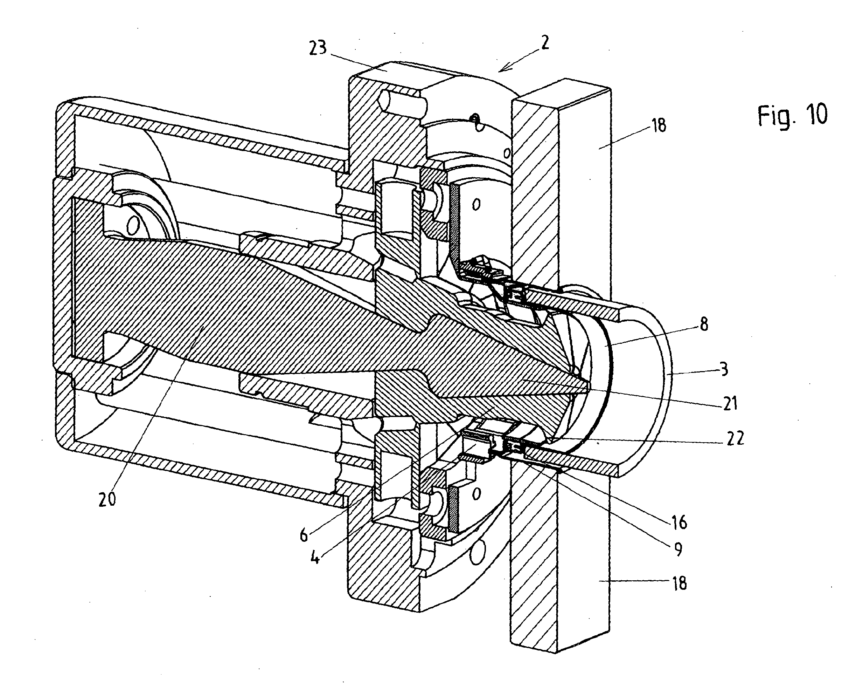

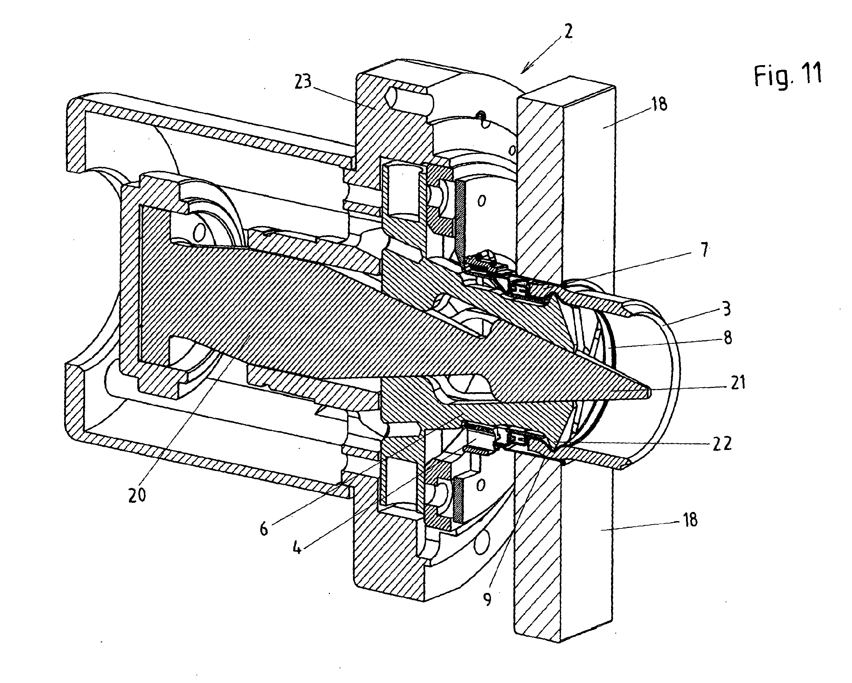

Fig. 8 zeigt den nächsten Verfahrensschritt. Pressstempel 20 und Gehäuse 23 wurden noch nicht bewegt. Der Leitungsverbinder 1 ist allerdings bereits samt Leitung 3 auf den Verbinderträger 19 der Befestigungsvorrichtung 2 aufgesteckt. Die Gegenhaltebacken 18 befinden sich noch in ihrer geöffneten Stellung. Als nächster Schritt werden die Gegenhalte-backen 18 geschlossen, so dass sie den Leitungsverbinder 1 bis zu ihrem Öffnen in Position halten, um ein vorzeitiges Abziehen des Leitungsverbinders 1 zu verhindern. Die Gegenhaltebacken 18 können auch zur Aufnahme von Gegenkräften beim weiter unten geschilderten Entfernen des Sperrkörpers 4 verwendet werden. Darüber hinaus ist es auch möglich vorzusehen, dass die Wand 9 des Leitungsverbinders 1 von den Gegenhaltebacken 18 radial nach außen abgestützt wird. Der Zustand mit geschlossenen Gegenhaltebacken 18 ist in Fig. 9 dargestellt. Daran anschließend wird das Gehäuse 23 samt Pressstempel 20 in Richtung hin zum Verbinderträger 18 verschoben, womit das Umformwerkzeug 6 in die Position gebracht wird, in der sie in nachfolgenden Verfahrensschritten den Leitungsverbinder 1 und die Leitung 3 miteinander umformen soll, um diese Bauteile an-einander zu befestigen (siehe Fig. 10). Fig. 11 zeigt den Endzustand nach erfolgtem Umformvorgang. Zum Umformen wurden die Umformvorsprünge 22 des Umformwerkzeuges 6 in die innere Wand 8 des Leitungsverbinders 1 gedrückt, so dass diese gemeinsam mit der Leitung 3 in der in der gewählten Schnittdarstellung gut sichtbaren Art und Weise plastisch umgeformt wurde. Die Gegenhaltebacken 18 haben bei diesem Umformvorgang verhindert, dass die äußere Wand 9 des Leitungsverbinders 1 nach außen gebogen wird. Nach Abschluss dieses Umformvorgangs ist der Leitungsverbinder 1 endgültig an der Leitung 3 befestigt. Das Auseinanderspreizen des Umformwerkzeuges 6 ist erfolgt, indem der Pressstempel 20 samt Spitze 21 in Richtung hin zum Leitungsverbinder 1 relativ zum Gehäuse 23 verschoben wurde.

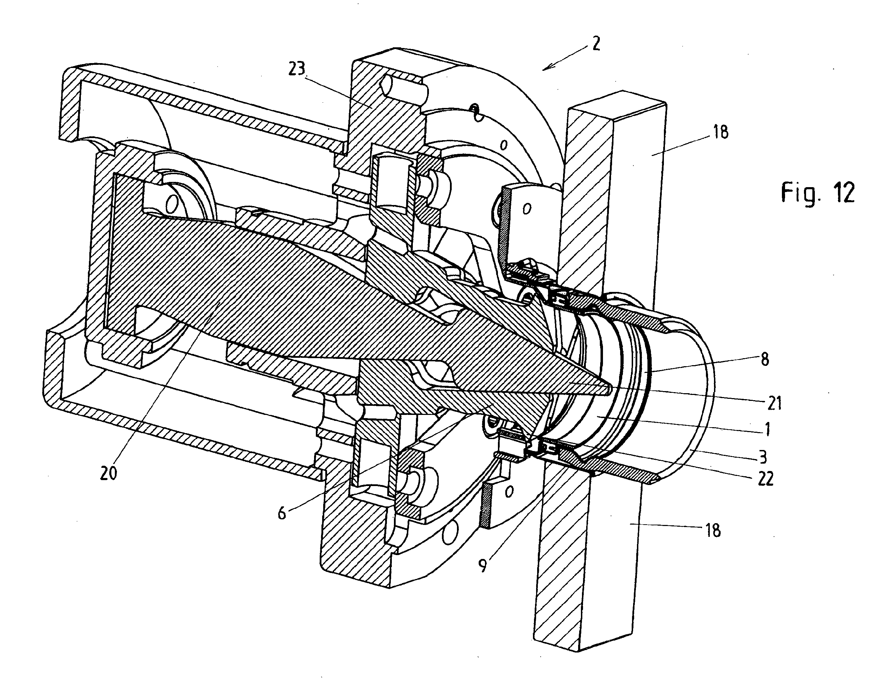

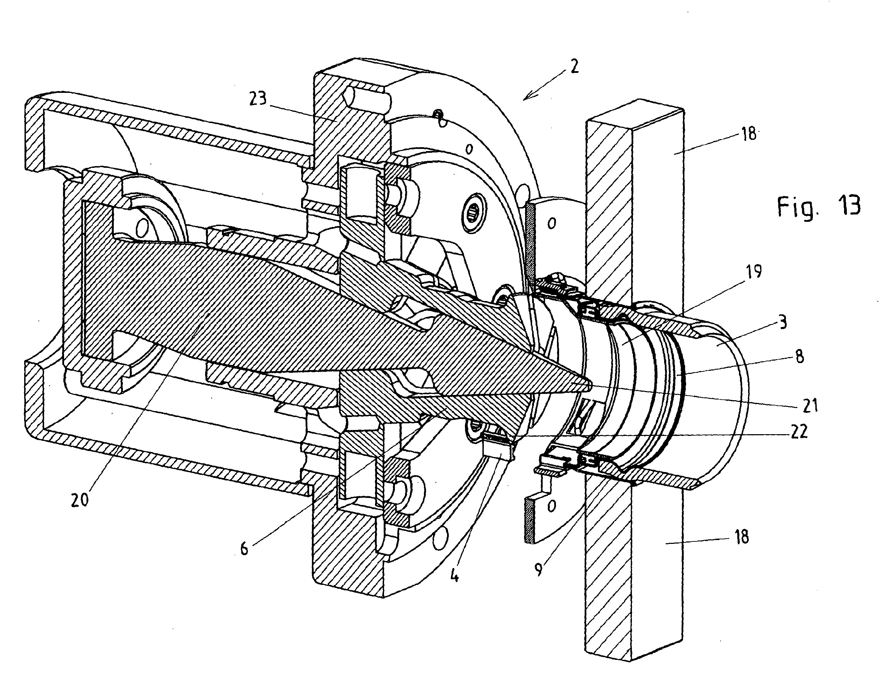

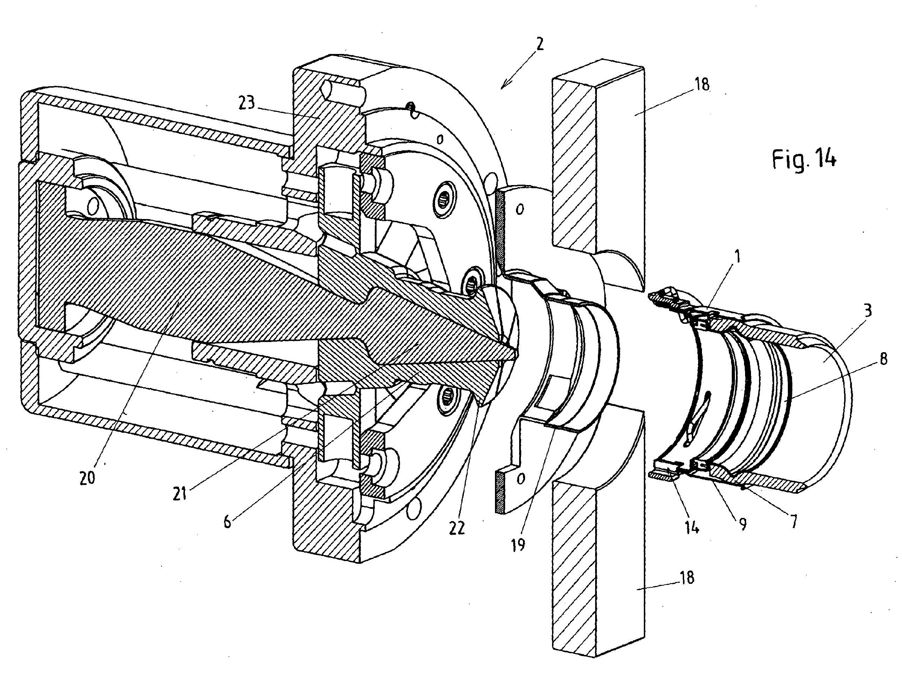

Ob der Umformvorgang in der gewünschten Art und Weise durchgeführt wurde, kann die Befestigungsvorrichtung über an sich bekannte, hier aber nicht dargestellte Sensoren überprüfen. Als Kontrollparameter können dabei z. B. die am Pressstempel 20 aufgewendeten Kräfte und/oder die vom Pressstempel 20 zurückgelegten Wegstrecken herangezogen werden. Kraft und/oder Weg können dabei als Funktion der Temperatur gemessen werden, falls dies für die Kontrolle des Umformvorgangs erheblich ist. Weiters kann auch durch eine hier nicht gezeigte Einrichtung überprüft werden, ob eine Leitung 3 überhaupt vorhanden ist. Auch andere Kontrollparameter sind denkbar. In Abhängigkeit des Prüfergebnisses kann eine entsprechende Regeleinrichtung der Befestigungsvorrichtung dann entscheiden, ob nun der Sperrkörper 4 vom Leitungsverbinder 1 abgezogen werden soll oder nicht. Ist dies der Fall, so wird der Sperrkörper 4 im gezeigten Ausführungsbeispiel durch Zurückziehen des Gehäuses 23 samt Pressstempel 20 mittels des Umformwerkzeuges 6 vom Leitungsverbinder 1 abgezogen. Fig. 12 zeigt die Stellung, in der das Umformwerkzeug 6 gerade am Sperrkörper 4 mittels eines Umformvorsprungs 22 angreift. Im gezeigten Ausführungsbeispiel handelt es sich somit beim Umformvorsprung 22 und der Sperrkörperentfernungsvorrichtung der Befestigungsvorrichtung um denselben Bauteil. Dies muss aber nicht zwingend so sein. In alternativen Ausgestaltungsformen können z.B. auch die Gegenhaltebacken 18 als Sperrkörperentfernungsvorrichtung verwendet werden. Im gezeigten Ausführungsbeispiel wird durch weiteres Zurückfahren von Gehäuse 23 samt Pressstempel 20 und Umformwerkzeug 6 in Richtung weg vom Leitungsverbinder 1, ausgehend von der in Fig. 12 gezeigten Stellung, nun der Sperrkörper 4 vom Leitungsverbin-der 1 entfernt bzw. abgezogen. Fig. 13 zeigt diesen Zustand. Anschließend können die Gegenhaltebacken 18 geöffnet und der Leitungsverbinder 1 samt Leitung 3 vom Verbinderträger 19 abgezogen werden. Dies ist in Fig. 14 dargestellt. Dort ist auch zu sehen, dass nun der Sperrkörper 4 nicht mehr die Ausnehmung 14 dieses Ausführungsbeispiels dieses Leitungsverbinders 1 blockiert, so dass der Gegenverbinder 5 in der in Fig. 6 dargestellten Art und Weise mit dem Leitungsverbinder 1 verbunden werden kann.

### Legende

### zu den Hinweisziffern:

- 1: Leitungsverbinder
- 2: Befestigungsvorrichtung
- 3: Leitung
- 4: Sperrkörper
- 5: Gegenverbinder
- 6: Umformwerkzeug
- 7: Endabschnitt
- 8: Wand
- 9: Wand
- 10: Aufnahmehohlraum
- 11: Nut
- 12: Indexkörper
- 13: Rastfeder
- 14: Ausnehmung
- 15: Ausnehmung
- 16: Dichtung
- 17: Raste
- 18: Gegenhaltebacken
- 19: Verbinderträger
- 20: Pressstempel
- 21: Spitze
- 22: Sperrkörperentfernungsvorrichtung
- 23: Gehäuse

## Patentansprüche

1. Verfahren bei dem ein Leitungsverbinder (1), insbesondere Steckverbinder, von einer Befestigungsvorrichtung (2) an einer Leitung (3) für flüssige und/oder gasförmige Medien befestigt wird, **dadurch gekennzeichnet, dass** während oder nach dem Befestigen des Leitungsverbinders (1) an der Leitung (3) ein am Leitungsverbinder (1) und/oder an der Leitung (3) vorab vorhandener Sperrkörper (4) mittels der Befestigungsvorrichtung (2) vom Leitungsverbinder (1) und/oder von der Leitung (3) entfernt wird, wobei durch den Sperrkörper (4), solange dieser am Leitungsverbinder (1) und/oder an der Leitung (3) vorhanden ist, ein Verbinden eines Gegenverbinders (5) mit dem Leitungsverbinder (1) verhindert wird.

2. Verfahren nach Anspruch 1, **dadurch gekennzeichnet, dass** die Befestigungsvorrichtung (2) zumindest ein Umformwerkzeug (6) aufweist, wobei der Leitungsverbinder (1) und/oder die Leitung (3) zum Befestigen des Leitungsverbinders (1) an der Leitung (3) zumindest bereichsweise, vorzugsweise plastisch, von dem Umformwerkzeug (6) umgeformt wird bzw. werden.

3. Verfahren nach Anspruch 2, **dadurch gekennzeichnet, dass** der Sperrkörper (4) mittels des Umformwerkzeugs (6) vom Leitungsverbinder (1) und/oder von der Leitung (3) entfernt wird.

4. Verfahren nach Anspruch 2 oder 3, **dadurch gekennzeichnet, dass** die Leitung (3), vorzugsweise ein Endabschnitt (7) der Leitung (3), vor dem Umformen in einen von Wänden (8, 9), insbesondere des Leitungsverbinders (1), begrenzten Aufnahmehohlraum (10) eingeschoben wird, wobei vorzugsweise vorgesehen ist, dass zumindest eine der den Aufnahmehohlraum (10) begrenzenden Wände (8, 9), vorzugsweise gemeinsam mit der Leitung (3) bzw. deren Endabschnitt(7), mittels des Umformwerkzeuges (6), vorzugsweise plastisch, umgeformt wird.

5. Verfahren nach einem der Ansprüche 1 bis 4, **dadurch gekennzeichnet, dass** von der Befestigungsvorrichtung (2) vor dem Entfernen des Sperrkörpers (4) anhand zumindest eines Kontrollparameters überprüft wird, ob der Leitungsverbinder (1) an der Leitung (3) befestigt wurde.

6. Verfahren nach Anspruch 5, **dadurch gekennzeichnet, dass** der oder zumindest einer der Kontrollparameter ein für den Befestigungsvorgang charakteristischer Kontrollparameter ist und/oder dass der oder zumindest einer der Kontrollparameter darin besteht, zu überprüfen, ob die Leitung (3) vorhanden ist.

7. Verfahren nach Anspruch 6, **dadurch gekennzeichnet, dass** als für den Befestigungsvorgang charakteristischer Kontrollparameter beim Befestigungsvorgang, vorzugsweise Umformvorgang, in oder an der Befestigungsvorrichtung (2), vorzugsweise vom Umformwerkzeug (6), aufgewendete Kräfte und/oder Wegstrecken herangezogen wird bzw. werden.

8. Verfahren nach einem der Ansprüche 1 bis 7, **dadurch gekennzeichnet, dass** der Sperrkörper (4) zum Entfernen vom Leitungsverbinder (1) und/oder von der Leitung (3) mittels der Befestigungsvorrichtung (2), vorzugsweise mittels des Umformwerkzeugs (6), vom Leitungsverbinder (1) und/oder von der Leitung (3) abgezogen und/oder abgeschraubt und/oder abgeschnitten und/oder abgebrochen wird und/oder die Entfernung des Sperrkörpers (4) mittels der Befestigungsvorrichtung (2), vorzugsweise mittels des Umformwerkzeugs (6), mittels, vorzugsweise plastischer, Umformung des Leitungsverbinders (1) und/oder der Leitung (3) vorgenommen wird.

9. Leitungsverbindungsvorrichtung, insbesondere für ein Verfahren nach einem der Ansprüche 1 bis 8, umfassend einen Leitungsverbinder (1) und einen mit dem Leitungsverbinder (1) insbesondere durch Stecken oder Schrauben verbindbaren Gegenverbinder (5), **dadurch gekennzeichnet, dass** der Leitungsverbinder (1) einen Sperrkörper (4) in einem Bereich aufweist, in welchem ein Abschnitt des Gegenverbinders (5) nach dem Verbinden mit dem Leitungsverbinder (1) bei einem entfernten Sperrkörper (4) positioniert ist, sodass durch den Sperrkörper (4), wenn dieser am Leitungsverbinder (1) vorhanden ist, ein Verbinden eines Gegenverbinders (5) mit dem Leitungsverbinder (1) verhindert ist, und dass der Sperrkörper (4), vorzugsweise ohne Deformation anderer Bestandteile des Leitungsverbinders (1), vom Leitungsverbinder (1) entfernbar ist.

## Claims

1. Method in which a line connector (1), in particular a plug connector is fastened to a line (3) for liquid and/or gaseous media by a fastening device (2), **characterized in that** during or after the fastening of the line connector (1) to the line (3), a blocking body (4) already present on the line connector (1) and/or the line (3) is removed from the line connector (1) and/or the line (3) by means of the fastening device (2), with the blocking body (4) preventing a mating body (5) from being connected to the line connector (1) as long as the blocking body is present on the line connector (1) and/or the line (3).

2. Method according to claim 1, **characterized in that** the fastening device (2) has at least one deformation tool (6), with at least sections of the line connector (1) and/or the line (3) being, preferred plastically, deformed by the deformation tool (6) in order to fasten the line connector (1) to the line (3).

3. Method according to claim 2, **characterized in that** the blocking body (4) is removed from the line connector (1) and/or from the line (3) by means of the deformation tool (6).

4. Method according to claim 2 or 3, **characterized in that** the line (3), preferably an end section (7) of the line (3), is inserted into a mounting cavity (10) limited by walls (8, 9), particularly of the line connector (1), with preferably being provided that at least one of the walls (8, 9) limiting the mounting cavity (10) is, preferably together with the line (3) or its end section (7), preferably plastically, deformed by means of the deformation tool (6).

5. Method according to one of the claims 1 to 4, **characterized in that** before the removal of the blocking body (4), the fastening device (2) checks by means of at least one control parameter, whether the line connecter (1) has been fastened to the line (3).

6. Method according to claim 5, **characterized in that** the or at least one of the control parameters is a parameter characteristic for the fastening process and/or that the or at least one of the control parameters is to check whether the line (3) is present.

7. Method according to claim 6, **characterized in that** forces and/or stretches of way used in or on the fastening device, preferably by the deformation tool (6), are consulted as control parameter characteristic for the fastening process during the fastening process, preferably deformation process.

8. Method according to one of the claims 1 to 7, **characterized in that** for removing the blocking body (4) from the line connector (1) and/or from the line (3) by means of the fastening device (2), preferably by means of the deformation tool (6), the blocking body (4) is drawn off and/or screwed off and/or cut off and/or broken off the line connector (1) and/or the line (3) and/or the removal of the blocking body (4) is effected by means of the fastening device (2), preferably by means of the deformation tool (6), by means of, preferably plastic, deformation of the line connector (1) and/or the line (3).

9. Line connecting device, in particular for a method according to one of the claims 1 to 8, comprising a line connector (1) and a mating connector (5) that can be connected to the line connector (1) in particular by plugging or screwing, **characterized in that** the line connector (1) has a blocking body (4) in a region, wherein a section of the mating connector (5) is positioned after the connection to the line connector (1) when the blocking body (4) is removed, so that the blocking body (4), as long as it is present on the line connector (1), prevents a mating connector (5) from being connected to the line connector (1) and that the blocking body (4) can be removed from the line connector (1), preferably without deforming other components of the line connector (1),.

## Revendications

1. Procédé dans lequel un raccord de conduite (1), en particulier un raccord enfichable, est fixé au moyen d'un dispositif de fixation (2) sur une conduite (3) pour milieux liquides et/ou gazeux, **caractérisé en ce que**, pendant ou après la fixation du raccord de conduite (1) sur la conduite (3), un élément de blocage (4) préalablement présent sur le raccord de conduite (1) et/ou sur la conduite (3) est enlevé du raccord de conduite (1) et/ou de la conduite (3) au moyen du dispositif de fixation (2), l'élément de blocage (4) empêchant, tant qu'il est présent sur le raccord de conduite (1) et/ou sur la conduite (3), un raccordement d'un contre-raccord (5) avec le raccord de conduite (1).

2. Procédé selon la revendication 1, **caractérisé en ce que** le dispositif de fixation (2) présente au moins un outil de déformation (6), le raccord de conduite (1) et/ou la conduite (3) étant, pour la fixation du raccord de conduite (1) sur la conduite (3), déformé(s) au moins par tronçons, de préférence plastiquement, par l'outil de déformation (6).

3. Procédé selon la revendication 2, **caractérisé en ce que** l'élément de blocage (4) est enlevé du raccord de conduite (1) et/ou de la conduite (3) au moyen de l'outil de déformation (6).

4. Procédé selon la revendication 2 ou 3, **caractérisé en ce que** la conduite (3), de préférence un tronçon d'extrémité (7) de la conduite (3), est, avant la déformation, insérée dans une cavité de réception (10) limitée par des parois (8, 9), en particulier du raccord de conduite (1), étant de préférence prévu qu'au moins une des parois (8, 9) limitant la cavité de réception (10) est déformée au moyen de l'outil de déformation (6), de préférence plastiquement, de préférence en commun avec la conduite (3) ou respectivement son tronçon d'extrémité (7).

5. Procédé selon une des revendications 1 à 4, **caractérisé en ce que**, par le dispositif de fixation (2), avant l'enlèvement de l'élément de blocage (4), il est vérifié à l'aide d'au moins un paramètre de contrôle si le raccord de conduite (1) a été fixé sur la conduite (3).

6. Procédé selon la revendication 5, **caractérisé en ce que** le paramètre de contrôle ou au moins un des paramètres de contrôle, est un paramètre de contrôle caractéristique pour le processus de fixation et/ou **en ce que** le paramètre de contrôle ou au moins un des paramètres de contrôle consiste à vérifier la présence de la conduite (3).

7. Procédé selon la revendication 6, **caractérisé en ce que**, en tant que paramètre de contrôle caractéristique pour le processus de fixation lors du processus de fixation, de préférence un processus de déformation, il est fait appel à des forces et/ou des distances de parcours appliquées dans ou sur le dispositif de fixation (2), de préférence par l'outil de déformation (6).

8. Procédé selon une des revendications 1 à 7, **caractérisé en ce que** l'élément de blocage (4), pour l'enlèvement à partir du raccord de conduite (1) et/ou de la conduite (3), est retiré et/ou dévissé et/ou découpé et/ou rompu à partir du raccord de conduite (1) et/ou de la conduite (3) au moyen du dispositif de fixation (2), de préférence au moyen de l'outil de déformation (6), et/ou **en ce que** l'enlèvement de l'élément de blocage (4) est entrepris au moyen du dispositif de fixation (2), de préférence au moyen de l'outil de déformation (6), au moyen d'une déformation, de préférence plastique, du raccord de conduite (1) et/ou de la conduite (3).

9. Dispositif de raccordement de conduite, en particulier pour un procédé selon une des revendications 1 à 8, comprenant un raccord de conduite (1) et un contre-raccord (5) pouvant être raccordé au raccord de conduite (1), en particulier par enfichage ou vissage, **caractérisé en ce que** le raccord de conduite (1) présente un élément de blocage (4) dans une zone dans laquelle un tronçon du contre-raccord (5) est positionné après le raccordement au raccord de conduite (1) quand un élément de blocage (4) est enlevé, de telle sorte que l'élément de blocage (4), quand il est présent sur le raccord de conduite (1), empêche un raccordement d'un contre-raccord (5) avec le raccord de conduite (1), et **en ce que** l'élément de blocage (4) peut être enlevé du raccord de conduite (1), de préférence sans déformation d'autres composants du raccord de conduite (1).
